# FASCICULE DE BREVET EUROPEEN

(11) **EP 1 341 360 B1**
(45) Date de publication et mention de la délivrance du brevet: **17.01.2007**
(21) Numéro de dépôt: 03290240.5
(22) Date de dépôt: 31.01.2003
(51) Int. Cl.: H04L 29/12, H04L 12/56

(54) **Système de gestion de réseau permettant la détermination d'une passerelle de communication entre domaines**
Netzmanagementsystem zur Bestimmung eines Gateway zur Kommunikation zwischen Domänen
Network management system enabling the determination of a gateway for communication between domains

(30) Priorité: 28.02.2002 FR 0202548
(43) Date de publication de la demande: 03.09.2003
(73) Titulaire: ALCATEL, 75008 Paris (FR)
(72) Inventeur: Preguica, Christophe, 91300 Massy (FR); Galand, Damien, 92370 Chaville (FR)
(74) Mandataire: Chaffraix, Sylvain

(56) Documents cités:
- US-A1- 2002 105 954
- VIXIE P ET AL: "RFC 2136 - Dynamic Updates in the Domain Name System (DNS UPDATE)" XP002174064 * abrégé *

## Description

La présente invention est relative à l'acheminement des paquets de données vers l'extérieur d'un réseau de données. Elle s'applique particulièrement bien aux réseaux de type "Internet".

Lorsqu'un noeud d'un réseau veut transmettre un paquet de données vers l'extérieur de son réseau, le paquet de données est acheminé *via* une passerelle. Cette passerelle est classiquement un routeur de bord (*Border Router*) qui a des moyens de communication d'une part avec les routeurs internes au réseau en question, ainsi qu'avec des routeurs d'autres réseaux, généralement d'autres passerelles (ou *Border router*).

Le noeud à l'origine de la transmission du paquet de données doit donc connaître l'adresse de cette passerelle.

Cette adresse peut être connue soit par configuration, soit en interrogeant un serveur de noms de domaines, généralement connu sous l'acronyme DNS (pour « *Domain Name Server* », en langue anglaise).

On peut alors comprendre que cette passerelle joue un rôle crucial dans l'acheminement des paquets de données entre deux domaines.

Il en résulte que la passerelle doit absorber la totalité du trafic acheminé entre les deux domaines. Ce trafic peut être important, et résulter sur un engorgement de la passerelle, avec, pour suites, une baisse de performance des transmissions entre les deux domaines.

De plus, la passerelle peut faire l'objet d'une défaillance matérielle ou logicielle, et ne plus être en mesure d'acheminer les paquets de données d'un domaine vers un autre. Dans une telle situation, les communications sont donc rendues impossibles, entre les deux domaines.

Le but de l'invention est de résoudre ce double problème en proposant que plusieurs passerelles puissent être disposées pour acheminer les paquets de données entre les deux domaines.

Plus précisément, l'invention a pour objet, système de gestion de réseau comportant des moyens pour obtenir des informations sur les équipements du réseau, certains de ces équipements étant des passerelles pour permettre la transmission de trafic à l'extérieur du réseau. Ce système de gestion de réseau se caractérise ce qu'il comporte des moyens pour communiquer au serveur de noms de domaines associé au réseau, l'adresse d'une ou plusieurs de ces passerelles, déterminées sur la base de ces informations.

Selon une mise en oeuvre de l'invention, les moyens pour communiquer sont prévus pour ordonner une liste de passerelles, préalablement à la communication au serveur de noms de domaines.

Selon un mode de réalisation de l'invention, les moyens pour communiquer mettent en oeuvre une commande de mise à jour dynamique pour communiquer la ou les adresses. Cette commande peut être prévue pour contenir une liste d'adresses. Elle peut, par exemple, être une commande du type « DNS update », conformément au RFC 2136.

Ainsi, soit le serveur de noms de domaine (DNS), soit le routeur à l'origine de la transmission, peut décider de la « meilleure » passerelle, à un moment donné, pour permettre la transmission des paquets de données vers le second domaine. Il est ainsi possible d'éviter d'envoyer les paquets de données sur une passerelle défaillante ou surchargée. Il est aussi possible d'effectuer une répartition de charge parmi l'ensemble des passerelles disponibles.

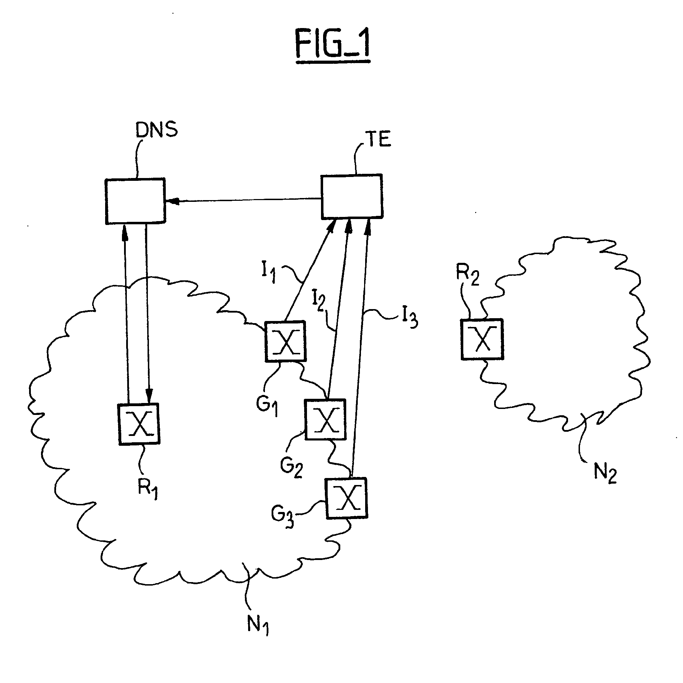

L'invention et ses avantages apparaîtront de façon plus claire dans la description qui va suivre en liaison avec la figure unique jointe, qui décrit une mise en oeuvre de l'invention.

Sur la figure unique, un routeur R₁ du domaine N₁ peut communiquer avec le domaine N₂ au moyen de trois passerelles G₁, G₂ et G₃. Ces passerelles ont la connaissance suffisante pour permettre l'acheminement des paquets de données entre les deux domaines N₁ et N₂ au moyen d'un protocole de routage de type BGP *(Border Gateway Protocol),* tel que défini par le RFC 1771 de l'IETF (*Internet Engineering Task Force*).

L'acheminement des paquets de données au sein d'un domaine, par exemple entre le routeur R₁ et une des passerelles G₁, G₂ ou G₃ peut, quant à lui, être pris en charge par un protocole de routage tel OSPF (*Open Shortest Path First*) tel que défini par le RFC 2328 de ce même IETF.

De façon classique en soi, le domaine N₁ est associé à un système de gestion de réseau TE.

Un système de gestion de réseau est un système modulaire rassemblant différents outils permettant à l'opérateur d'un réseau ou d'un domaine de réseau de gérer différents aspects de celui-ci : gestion des pannes, du trafic, de la tarification des communications etc.

Dans le cadre de la présente invention, ce système de gestion de réseau peut se réduire à un outil de gestion de trafic (*Traffic Engineering*).

Les passerelles G₁, G₂ et G₃ transmettent des informations au système de gestion de réseau TE, respectivement l₁, l₂et l₃. La transmission peut être périodique sur l'initiative des passerelles elles-mêmes, ou bien sur l'initiative du système de gestion de réseau TE.

Ces informations sont représentatives de la charge et/ou du statut de chacune des passerelles. Le système de gestion de réseau TE peut ainsi connaître le statut des différentes passerelles, c'est-à-dire si elles sont opérationnelles ou non, et leur charge.

En fonction de ces informations, le système de gestion de réseau TE peut
- choisir les passerelles qui pourront être utilisées pour les transmissions inter domaines. Pour ce faire, le système de gestion de réseau peut exclure les passerelles défaillantes, par exemple faisant l'objet d'une panne logicielle ou matérielle.
- Ordonner ces passerelles, par exemple en fonction de leur charge et/ou de leur capacité.

L'ordonnancement peut être fait de sorte que la passerelle ayant le maximum de disponibilité se trouve en haut de liste, et ainsi de suite jusqu'à la dernière passerelle qui est celle ayant le moins de disponibilité. Le calcul de la disponibilité de chaque passerelle peut dépendre de leur capacité, chaque passerelle pouvant, en pratique, être d'un modèle différent, voir d'un constructeur différent. La disponibilité peut aussi dépendre de la charge de chaque passerelle, qui est fonction du trafic réel véhiculé par les passerelles. Cette charge est directement transmise par les passerelles G₁, G₂, G₃, au moyen des informations l₁ l₂, l₃.

Le système de gestion de réseau TE dispose en outre de moyens pour communiquer l'adresse d'une ou plusieurs de ces passerelles, au serveur de noms de domaines DNS associé au domaine N₁.

Selon une première mise en oeuvre de l'invention, le système de gestion de réseau TE transmet au serveur de noms de domaines DNS, uniquement l'adresse de la « meilleure » passerelle. Cette adresse peut être transmise par une commande de mise à jour dynamique, au serveur de noms de domaines. Cette commande de mise à jour dynamique peut, par exemple, être la commande « DNS update » telle que définie par le RFC 2136 de l'IETF, intitulé « *Dynamic Update in the Domain Name System* ».

Cette commande de mise à jour dynamique permet à un dispositif extérieur au serveur de noms de domaine DNS de modifier les tables internes de celui-ci. Elle permet notamment d'ajouter une correspondance entre un nom symbolique correspondant au domaine N₂ et l'adresse de la passerelle déterminée par le système de gestion de réseau TE.

Le système de gestion de réseau TE peut transmettre une nouvelle adresse régulièrement, chaque fois que les conditions relatives des passerelles G₁, G₂, G₃ changent. Par exemple, s'il apprend qu'une des passerelles devient inopérationnelle, alors il pourra transmettre l'adresse d'une nouvelle passerelle au serveur de noms de domaine DNS. De même, si la répartition des charges évolue parmi les passerelles, il pourra aussi transmettre l'adresse d'une autre passerelle.

Lorsque le routeur R₁ veut transmettre un paquet de données vers le domaine N₂, il va transmettre tout d'abord une requête vers le serveur de noms de domaines DNS comportant un nom symbolique correspondant au domaine N₂.

Le serveur de noms de domaines DNS consulte alors ses tables internes. Du fait du mécanisme de mise à jour mis en oeuvre par le système de gestion de réseau, le serveur de noms de domaine DNS possède l'adresse de la passerelle, la « meilleure » à un instant donné.

Cette adresse est associée, par le mécanisme de mise à jour dynamique précédemment décrit, au nom symbolique contenu dans la requête.

Le serveur de noms de domaines DNS transmet donc l'adresse de la passerelle la « meilleure » au routeur R₁, selon le mécanisme habituel de communication entre routeur et serveurs de noms de domaines. Ce routeur R₁ peut alors transmettre le paquet de données vers le domaine N₂, en utilisant la passerelle considérée comme la « meilleure » par le système de gestion de réseau, à cet instant donné.

Cette passerelle transmet alors le paquet de données au routeur R₂ qui peut le transmettre dans le domaine N₂.

Selon une seconde mise en oeuvre de l'invention, le système de gestion de réseau TE transmet les adresses de plusieurs passerelles au serveur de noms de domaines, sous la forme d'une liste.

Cette liste peut être ordonnée préalablement à la communication au serveur de noms de domaines DNS.

Le critère choisi pour l'ordonnancement des passerelles peut être la charge de celles-ci et/ou les ressources dont ils disposent, de la même façon que pour la détermination de la « meilleure» passerelle dans la première mise en oeuvre.

De la même façon que décrit pour la première mise en oeuvre, la communication de la liste, ordonnée ou non, des adresses de passerelles peut être effectuée au moyen d'une commande de mise à jour dynamique, par exemple du type « DNS Update » conforme au RFC 2136 de l'IETF.

Dans le cadre de cette mise en oeuvre, un nouveau type d'entrée doit être prévu dans les tables internes du serveur de noms de domaine, de même que la commande de mise à jour dynamique doit être prévue pour contenir une liste d'adresses.

Les tables internes du serveur peuvent alors comporter un type d'entrée qui consiste à mettre en relation, une liste d'adresses à un nom symbolique.

La suite du mécanisme est conforme à l'état de l'art et à ce qui a été décrit pour la première mise en oeuvre : le routeur R₁, qui souhaite transmettre un paquet de données vers le domaine N₂, transmet tout d'abord une requête au serveur de noms de domaines DNS, contenant un nom symbolique correspondant à ce domaine N₂. Le serveur de noms de domaines DNS lui transmet alors, la liste associée au nom symbolique contenu dans la requête.

Le routeur R₁ a alors à disposition la liste des passerelles disponibles qui lui permettent d'accéder au domaine N₂.

Son choix peut simplement consister à utiliser la première adresse de la liste.

Cette façon de faire permet au routeur R₁ d'avoir tout de suite, la liste complète des passerelles disponibles. Ainsi, si la première de ces passerelles était devenue dans l'intervalle indisponible, ou si le chemin entre ce routeur R₁ et cette passerelle était mal configuré, il est alors facile pour le routeur R₁ de s'adresser à la passerelle suivante de la liste, sans qu'il lui soit nécessaire d'interroger à nouveau le serveur de noms de domaines.

## Revendications

1. Système de gestion de réseau (TE), comportant des moyens pour obtenir des informations (I₁, I₂, I₃) sur les équipements du réseau (N₁), certains desdits équipements étant des passerelles (G₁, G₂, G₃) pour permettre la transmission de trafic à l'extérieur dudit réseau, **caractérisé ce qu**'il comporte des moyens pour communiquer au serveur de noms de domaines (DNS) associé audit réseau, l'adresse d'une ou plusieurs de ces passerelles, déterminées sur la base desdites informations.

2. Système de gestion de réseau selon la revendication 1, dans lequel lesdits moyens pour communiquer sont prévus pour ordonner une liste de passerelles préalablement à la communication audit serveur de noms de domaines.

3. Système de gestion de réseau selon l'une des revendications 1 ou 2, dans lequel lesdits moyens pour communiquer mettent en oeuvre une commande de mise à jour dynamique pour communiquer ladite ou lesdites adresses.

4. Système de gestion de réseau selon la revendication précédente, dans lequel ladite commande est prévue pour contenir une liste d'adresses.

5. Système de gestion de réseau selon l'une des revendications 3 ou 4, dans lequel ladite commande est du type « DNS update », conformément au RFC 2136.

## Claims

1. Network management system (TE), including means for obtaining information (I₁, I₂, I₃) on the equipments of the network (N₁), certain of said equipments being gateways (G₁, G₂, G₃) for enabling the transmission of traffic to the exterior of said network, **characterised in that** it includes communication means for communicating to the domain name server (DNS) associated with said network the address of one or more of those gateways, determined on the basis of said information.

2. Network management system according to claim 1, wherein said communication means are adapted to put a list of gateways into order before communicating it to said domain name server.

3. Network management system according to either claim 1 or claim 2, wherein said communication means use a dynamic update command to communicate said address or addresses.

4. Network management system according to the preceding claim, wherein said command is adapted to contain a list of addresses.

5. Network management system according to either claim 3 or claim 4, wherein said command is of the "DNS update" type, conforming to RFC 2136.

## Patentansprüche

1. Netzmanagementsystem (TE), das Mittel enthält, um Informationen (I₁, I₂, I₃) über die Ausrüstungen des Netzes (N₁) zu gewinnen, wobei einige dieser Ausrüstungen Gateways (G₁, G₂, G₃) sind, um die Verkehrsübertragung aus diesem Netz heraus zu ermöglichen, **dadurch gekennzeichnet, dass** es Mittel enthält, um diesem Domänennamenserver (DNS), der mit diesem Netz verknüpft ist, die Adresse eines oder mehrerer dieser Gateways mitzuteilen, die auf der Grundlage dieser Informationen bestimmt wurde/n.

2. Netzmanagementsystem gemäß Anspruch 1, bei dem diese Mittel zum Kommunizieren so vorgesehen sind, dass sie eine Gatewayliste vor der Übermittlung an diesen Domänennamenserver ordnen.

3. Netzmanagementsystem gemäß einem der Ansprüche 1 oder 2, bei dem diese Mittel zum Kommunizieren eine dynamische Aktualisierungssteuerung einsetzen, um diese Adresse oder diese Adressen mitzuteilen.

4. Netzmanagementsystem gemäß dem vorstehenden Anspruch, bei dem diese Steuerung so vorgesehen ist, dass sie eine Adressenliste enthält.

5. Netzmanagementsystem gemäß einem der Ansprüche 3 oder 4, in dem diese Steuerung vom Typ "DNS update" gemäß RFC 2136 ist.
